# EUROPEAN PATENT APPLICATION

(11) **EP 3 128 424 A1**
(43) Date of publication of application: **08.02.2017**
(21) Application number: 15774425.1
(22) Date of filing: 15.01.2015
(51) Int. Cl.: G06F 9/50

(54) **ELECTRONIC DEVICE AND STORAGE MEDIUM**

(30) Priority: 03.04.2014 JP 2014076889
(71) Applicant: Sony Corporation, Tokyo 108-0075 (JP)
(72) Inventor: MINEO, Yoshiyuki, Tokyo 108-0075 (JP)
(74) Representative: MFG Patentanwälte Meyer-Wildhagen Meggle-Freund Gerhard PartG mbB
(86) International application number: PCT/JP2015/050965
(87) International publication number: WO 2015/151548

(57) **Abstract**

[Object] To achieve more optimum task distribution reflecting power statuses of devices.

[Solution] Provided is an electronic device that is connected to a network, the electronic device including: a power status detecting unit configured to acquire information indicating a power status of each of one or a plurality of devices connected to the network; a device selecting unit configured to select a device that processes a task of the electronic device from among the one or plurality of devices, on the basis of the power status of each of the one or plurality of devices; and a request transmitting unit configured to transmit a task processing request to the selected device.

## Description

### Technical Field

The present disclosure relates to electronic devices and recording media.

### Background Art

In recent years, functionality of the electronic devices has been increased. For example, televisions and game consoles that have high image processing performance have been widespread. In addition, along with the popularization of smartphones and tablet type personal computers (PCs), it has become more common that a user has a plurality of information processing terminals. Such a device has high information processing performance, and thereby functions to be provided for the users have been advanced. Sufficient service quality may not be ensured by using each device independently.

Under the above described situation, for example, Patent Literature 1 has proposed a technology of using a device which is more suitable as a scheduler which performs assignment processing in order to assign processing of a task requested by a certain electronic device (client) on a network to another electronic device (node) on the network. Even when the device is not temporarily used as a scheduler, the device can potentially function as a potential scheduler, so that it is possible to continue processing using another device as a scheduler even when, for example, the device which functions as the scheduler no longer fulfills the function. Consequently, it is possible to efficiently and stably execute task distribution processing.

### Citation List

### Patent Literature

Patent Literature 1: JP 2013-61700A

### Summary of Invention

### Technical Problem

However, the electronic devices on the network may include not only a device connected to a power source but also a battery-powered device such as a mobile device or a wearable device, for example. When trying to execute the task distribution processing in the plurality of devices including the above described devices, optimum task distribution may be different depending on power source connecting statuses and battery residual of respective devices.

Accordingly, the present disclosure proposes a novel and improved electronic device and recording medium that are capable of more optimum task distribution reflecting power statuses of devices.

### Solution to Problem

According to the present disclosure, there is provided an electronic device that is connected to a network, the electronic device including: a power status detecting unit configured to acquire information indicating a power status of each of one or a plurality of devices connected to the network; a device selecting unit configured to select a device that processes a task of the electronic device from among the one or plurality of devices, on the basis of the power status of each of the one or plurality of devices; and a request transmitting unit configured to transmit a task processing request to the selected device.

According to the present disclosure, there is provided a recording medium having a program stored therein, the program causing a processor included in an electronic device connected to a network to achieve: a function of acquiring information indicating a power status of each of one or a plurality of devices connected to the network; a function of selecting a device that processes a task of the electronic device from among the one or plurality of devices, on the basis of the power status of each of the one or plurality of devices; and a function of transmitting a task processing request to the selected device.

### Advantageous Effects of Invention

As described above, the present disclosure achieves more optimum task distribution reflecting power statuses of devices.

Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is a diagram illustrating an example of a system according to an embodiment of the present disclosure.
[FIG. 2] FIG. 2 is a block diagram illustrating a functional configuration example of an electronic device according to an embodiment of the present disclosure.
[FIG. 3] FIG. 3 is a flowchart illustrating an example of processing in an electronic device according to an embodiment of the present disclosure.
[FIG. 4] FIG. 4 is a diagram illustrating an example of information stored as power status information in an embodiment of the present disclosure.
[FIG. 5] FIG. 5 is a sequence diagram illustrating an example of data exchange between devices in an embodiment of the present disclosure.
[FIG. 6] FIG. 6 is a block diagram showing a hardware configuration example of an information processing device according to an embodiment of the present disclosure.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that the description is given in the following order.
- 1.: System configuration
- 2.: Functional configuration of electronic device
- 3.: Workflow of processing
- 4.: Example of stored information
- 5.: Example of data exchange
- 6.: Another embodiment
- 7.: Hardware configuration
- 8.: Supplement

### (1. System configuration)

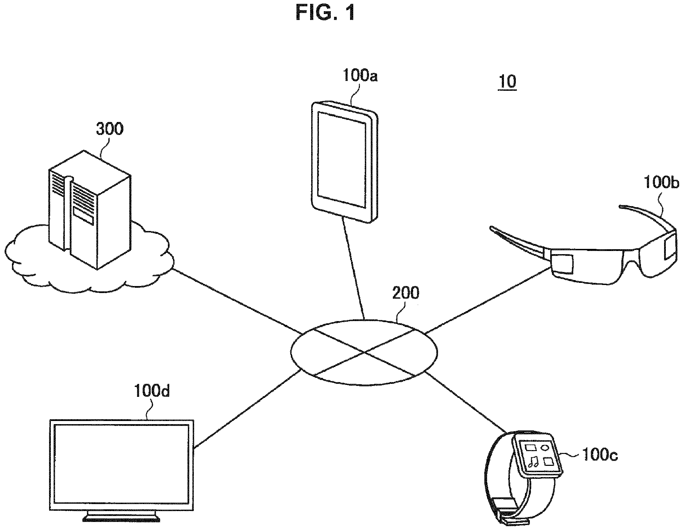

FIG. 1 is a diagram illustrating an example of a system according to an embodiment of the present disclosure. With reference to FIG. 1, a system 10 includes electronic devices 100 connected to a network 200. The system 10 may further include a server 300 connected to the network 200.

The electronic devices 100 provide various functions for users. For example, the electronic devices 100 may be mobile devices such as a smartphone 100a and a tablet, and may be wearable devices such as eyewear 100b and a smartwatch 100c. In addition, the electronic devices 100 may be other consumer electronics (CE) devices such as a PC and a television 100d. The server 300 provides various services in response to requests from the electronic devices 100. For example, the server 300 includes one or a plurality of server devices that provide various server functions, such as an application server and a database server. For example, each of the electronic devices 100 and the server devices constituting the server 300 may be implemented by a hardware configuration of an information processing device described later.

The electronic device 100 and the server 300 are connected via the network 200. In the case where the system 10 includes a plurality of electronic devices 100, the electronic devices 100 are connected to each other via the network 200. The network 200 may be a wired or wireless network such as the Internet or a home LAN.

### (2. Functional configuration of electronic device)

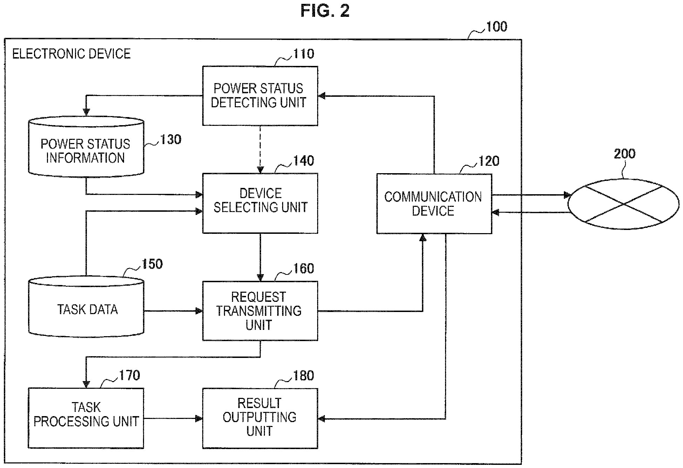

FIG. 2 is a block diagram illustrating a functional configuration example of an electronic device according to an embodiment of the present disclosure. With reference to FIG. 2, the electronic device 100 includes a power status detecting unit 110, a device selecting unit 140, a request transmitting unit 160, and a result outputting unit 180. Such a functional configuration may be achieved by a processor operating in accordance with a program such as a CPU included in the electronic device 100. In addition, the electronic device 100 includes a communication device 120 that communicates with the network 200. The electronic device 100 stores power status information 130 and task data 150 in its memory or storage.

The power status detecting unit 110 acquires information indicating power statuses of one or a plurality of devices connected to the network. More specifically, for example, the power status detecting unit 110 internally acquires first information indicating a power status of the electronic device 100 itself. In addition, for example, the power status detecting unit 110 acquires second information indicating power statuses of other devices connected to the network 200 via the communication device 120. Both the first information and the second information are stored as the power status information 130. The power status information 130 may include information indicating battery residual, a power source connecting status, predicted operating time, and/or processing performance of each device, for example.

The device selecting unit selects a device that processes a task of the electronic device 100 from among the one or plurality of devices connected to the network, on the basis of the power statuses of these devices. For example, the device selecting unit 140 selects a device on the basis of power statuses indicated by the power status information 130. As described above, the power status information 130 may include the first information indicating the power status of the electronic device 100 itself and the second information indicating the power statuses of the other devices. In this case, on the basis of the power statuses indicated by the first information and the second information, the device selecting unit 140 selects the electronic device 100 itself to process a task or selects another device to request to process the task.

More specifically, for example, on the basis of the first information, the device selecting unit 140 computes battery residual of the electronic device 100 itself when the electronic device 100 itself processes the task. In addition, on the basis of the second information, the device selecting unit 140 computes battery residual of another device when the another device is requested to process the task. On the basis of the result of comparison of battery residual, the device selecting unit 140 selects the electronic device 100 itself to process the task or selects the another device to request to process the task.

For example, the battery residual in both cases are computed on the basis of a predicted value of an amount of power to be consumed to process the task. The amount of power to be consumed to process the task processing is computed on the basis of a type of the task stored as the task data 150, an amount of data used by the task, and processing performance of the electronic device 100 and the other devices. Power is also consumed for computing the amount of power to be consumed and battery residual. Therefore, the computation procedure is desired to be simplified. For example, to compute the amount of power to be consumed, a simple function using the amount of data to be used and fixed values depending on types of tasks may be used.

The request transmitting unit 160 transmits a task processing request to the device selected by the device selecting unit 140. For example, in the case where the device selecting unit 140 has selected the electronic device 100 itself to process the task, the request transmitting unit 160 internally transmits the request to a task processing unit 170. Alternatively, for example, in the case where the device selecting unit 140 has selected another device to request to process the task, the request transmitting unit 160 transmits the request to the another device on the network 200 via the communication device 120. Alternatively, for example, in the case where the task is distributed to the electronic device 100 and the another device and processed by them, the request transmitting unit 160 may transmits requests to both the task processing unit 170 and the another device on the network 200.

The request transmitted by the request transmitting unit 160 may include data acquired from the task data 150. The device receives the request, and process the task by using the data included in the request. The request may include the predicted value of the amount of power to be consumed to process the task that has been computed by the device selecting unit 140. In this case, the device that has received the request can reject the task processing when it is determined that the amount of power to be consumed is too much larger than battery residual, for example. In this case, the device transmits a notification of rejection to the electronic device 100, and the device selecting unit 140 of the electronic device 140 selects another device to request to process the task.

In the case where the request transmitting unit 160 has internally transmitted the request, the task processing unit 170 executes the task in response to the request. The task may include tasks executed by various devices including the electronic devices 100 illustrated as an example with reference to FIG. 1, more specifically, such as the smartphone 100a, the eyewear 100b, the smartwatch 100c, and the television 100d, for example. As functional configurations of such devices to execute the task, various known configurations can be adopted. Therefore, detailed description is omitted here.

The result outputting unit 180 outputs the result of executing the task. For example, in the case where the task is associated with output of content, more specifically, output of images, sound, and the like, the result outputting unit 180 carries out control that causes an output device (not illustrated) included in the electronic device 100 such as a display and a speaker to output the content. Alternatively, in the case where the task is not associated with the output but a notification that the task has been executed is required, the result outputting unit 180 carries out control that causes the output device to output the notification. Alternatively, the result outputting unit 180 may internally output the result of executing the task as a log. In the case where the electronic device 100 itself has executed the task, the execution result is acquired from the task processing unit 170. Alternatively, in the case where another device has been requested to execute the task via the communication device 120, the execution result is acquired by the communication device 120 via the network 200.

As described above, the present disclosure achieves more optimum task distribution reflecting power statuses of devices according to the above described functional configuration of the electronic device 100. For example, in the case where battery residual of the electronic device 100 is low, the device selecting unit selects another device that has sufficient battery residual or that is connected to a power source to request to process the task. Alternatively, for example, in the case where the electronic device 100 has sufficient battery residual and battery residual of another device connected to the network 200 is low, the device selecting unit selects the electronic device 100 itself to process the task even if processing performance of the another device is a little bit higher than the electronic device 100.

Examples of the task processed by the electronic device 100 or the another device include JavaScript ahead-of-time (AOT) compilation at a time of displaying a HyperText Markup Language (HTML) document, encryption of various kinds of data, and encoding/decoding of images and sound.

### (3. Workflow of processing)

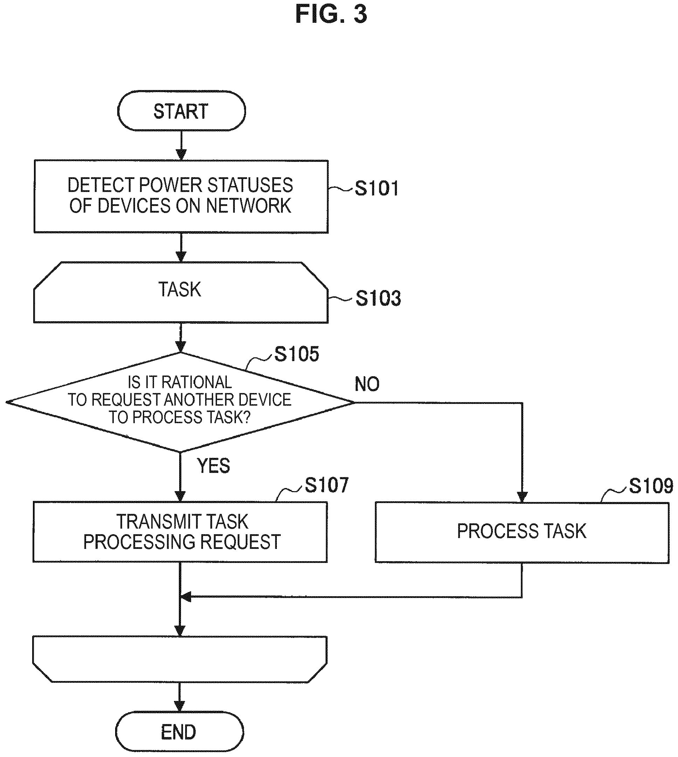

FIG. 3 is a flowchart illustrating an example of processing in an electronic device according to an embodiment of the present disclosure. With reference to FIG. 3, in the electronic device 100, the power status detecting unit 110 first detects power statuses of devices on the network 200 (S101). The power statuses may be detected when the task to be processed is generated in the electronic device 100, or may be periodically detected regardless of presence or absence of the task.

In the case where the power status detecting unit 110 actively detects the power statuses, the power status detecting unit 110 transmits a request to each device on the network 200 via the communication device 120. Alternatively, each device on the network 200 may transmit information indicating its power statuses to the electronic device 100 in the case where the device is newly connected to the network 200, in the case where the device is connected to a power source or disconnected from the power source, and/or in the case where its battery residual has been changed. In this case, the power status detecting unit 110 passively detects a power status of each device as needed.

Next, loop processing for each task to be processed is executed in the electronic device 100 (S103). First, the device selecting unit 140 refers to the task data 150 and determines whether or not it is rational to request another device on the network 200 to process the task (S105). As described above, the determination of whether or not it is rational to request the another device on the network 200 to process the task is based on the power statuses of the electronic device 100 and the another device.

For example, it is rational to request the another device to process the task in the case where the battery residual of the electronic device 100 is low, the another device has sufficient battery residual (or the another device is connected to a power source), and an amount of power to be saved by the electronic device 100 requesting the another device to process the task is larger than an amount of power to be consumed by communication through which the electronic device 100 requests the another device to process the task. On the other hand, it is not rational to request the another device to process the task in the case where the electronic device 100 has relatively sufficient battery residual but battery residual of the another device is low, or in the case where an amount of power to be consumed by communication through which the electronic device 100 requests the another device to process the task is larger than an amount of power to be saved by the electronic device 100 requesting the another device to process the task.

In the case where it has been determined that requesting the another device to process the task is rational (YES in S105), the request transmitting unit 160 transmits the task processing request to the another device on the network 200 via the communication device 120 (S107). On the other hand, in the case where it has been determined that requesting the another device to process the task is not rational (NO in S105), the request transmitting unit 160 transmits an internal request to the task processing unit 170, and the task processing unit 170 processes the task (S109).

### 4. Example of stored information

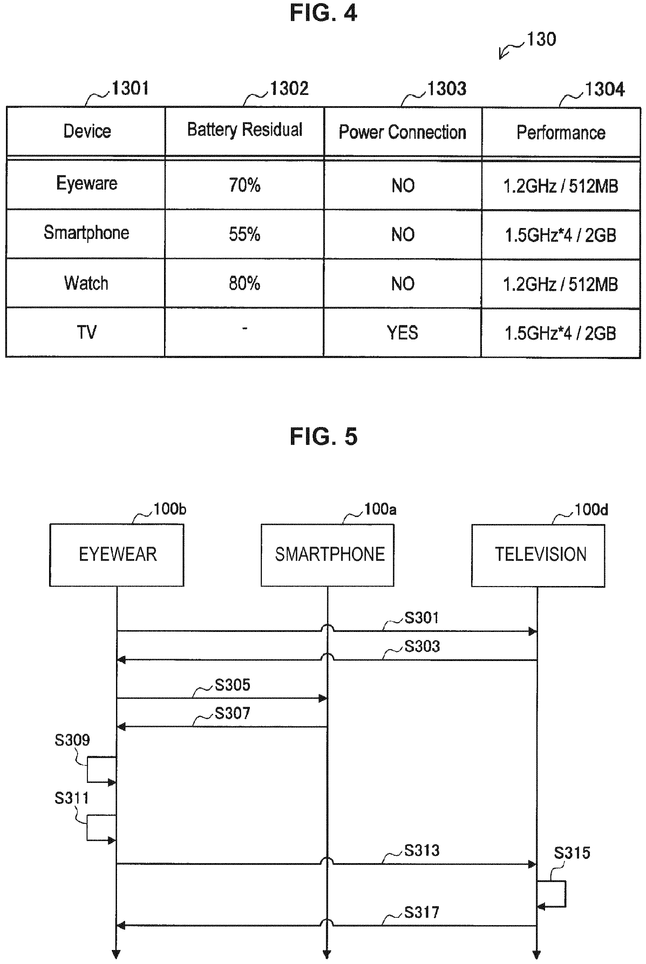

FIG. 4 is a diagram illustrating an example of information stored as power status information in an embodiment of the present disclosure. With reference to FIG. 4, the power status information 130 includes items of device name 1301, battery residual 1302, power connection flag 1303, and processing performance 1304. Hereinafter, information indicated by each item is further described.

The device name 1301 is information for identifying each device connected to the network 200. In the example illustrated in FIG. 4, the power status information of the smartphone 100a, the eyewear 100b, the smartwatch 100c, and the television 100d that have been described with reference to FIG. 1 is stored. Note that, although specific names (types of devices) are described in the item of device name 1301 in FIG. 4 for illustrative purposes, model numbers of devices or IDs allocated in the system 10 may be used as the device name 1301.

The battery residual 1302 indicates battery residual of each device. For example, in the case of the device connected to a power source such as the television 100d, an invalid value (null) is input into the battery residual 1302 like the example in FIG. 4, or the battery residual 1302 may be constantly treated as 100%. The power connection flag 1303 indicates whether or not each device is connected to a power source. In the example illustrated in FIG. 4, the television 100d alone is connected to a power source, and the smartphone 100a, the eyewear 100b, and the smartwatch 100c are not connected to power sources. In the case where such a device is connected to a power source to charge its battery, the power connection flag 1303 is updated.

The processing performance 1304 indicates performance of each device to process a task. In the example in FIG. 4, processing performance is expressed with the number of clocks, the number of cores, and a cache memory size of each CPU. The device having higher processing performance can process the same task in a shorter time and more efficiently. Accordingly, if the devices consume a similar amount of power per hour, an amount of power to be consumed to process the same task is reduced when the task is processed by the device having higher processing performance. Alternatively, the processing performance 1304 may be expressed with indexes indicating processing performance per power consumption. In this case, a device having higher processing performance can process the task with less power consumption. In addition to or instead of preferential selection of a device that the battery residual 1302 and the power connection flag 1303 indicates that this device has sufficient battery residual (or is connected to the power source) as a task processing request destination, the device selecting unit 140 may preferentially select a device that the performance 130 indicates that this device can process the task with less power consumption as the task processing request destination.

The processing performance 1304 may further include information indicating dynamic change in performance of each device to process a task. For example, in the case where a device is processing another task (task of device itself, or task requested from another device to process), the performance of the device to process a new task decreases temporarily. The processing performance 1304 may indicate real-time processing performance of each device by using a CPU utilization ratio or cache memory residual. In addition, the processing performance 1304 may include information on task that is being executed by each device (type of task and amount of data used by task), and the device selecting unit 140 may estimate real-time processing performance of each device on the basis of this information.

With reference to FIG. 4, the example of the power status information 130 in the present embodiment has been described. However, the power status information 130 is not limited to the above example, and may include various items. For example, instead of or in addition to the battery residual 1302, the power status information 130 may include predicted operating time of devices. For example, the predicted operating time of each device is computed on the basis of battery residual and average power to be consumed by each device. In addition, the predicted operating time may be computed in view of an amount of power currently consumed by a device processing a task.

### (5. Example of data exchange)

FIG. 5 is a sequence diagram illustrating an example of data exchange between devices in an embodiment of the present disclosure. FIG. 5 illustrates an example in which the eyewear 100b selects a device to request to process a task in the system 10 on the basis of information indicating power statuses of the smartphone 100a and the television 100d.

In the example in FIG. 5, the eyewear 100b first acquires information indicating power statuses from the smartphone 100a and the television 100d (S301 to S309). More specifically, the power status detecting unit 110 of the eyewear 100b transmits a request to the television 100d via the communication device 120 and the network 200 (S301), and receives information provided by the television 100d in response to the request (S303). In a similar way, the power status detecting unit 110 of the eyewear 100b also transmits a request to the smartphone 100a (S305), and receives information provided by the smartphone 100ain response to the request (S307). The power status detecting unit 110 stores the received information as the power status information 130 (S309).

Note that, for example, the above described processing in S301 to S309 may be carried out when the task to be processed is generated in the eyewear 100b, or may be periodically carried out regardless of presence or absence of the task. Alternatively, regarding the provision of information from the smartphone 100a and the television 100d, the information may be transmitted from the smartphone 100a and the television 100d in the case where these devices are newly connected to the network 200, are connected to power sources, are disconnected from the power sources, or their battery residual are changed. In such a case, the eyewear 100b does not necessarily transmit the requests such as S301 and S305.

Next, in the eyewear 100b, on the basis of the power status information 130 including the information acquired in S103 and S307, the device selecting unit 104 selects a device to process a task generated in the eyewear 100b (S311). More specifically, the device selecting unit 140 selects the eyewear 100b itself to execute the processing or selects another device to request to execute the processing. In the case of requesting the another device to execute the processing, the device selecting unit 140 selects which of the smartphone 100a and the television 100d to request to execute the processing.

In other words, in S303 and S307 in the example in FIG. 5, the power status detecting unit 110 of the eyewear 100b acquires information indicating power statuses of the first device (smartphone 100a) and the second device (television 100d) that are different from the eyewear 100b. In the case of selecting the another device to request to process the task, the device selecting unit 140 of the eyewear 100b further selects the first device (smartphone 100a) or the second device (television 100d) to request to process the task.

Note that, it is also possible for the device selecting unit 140 to distribute the task processing and to select both the first device and the second device to request to process the task. The case where the eyewear 100b requests another device to process the task includes the case where the eyewear 100b itself processes a part of the task and requests the another device to process the other part of the task in addition to the case where the eyewear 100b request the another device to process the whole task.

In the example in FIG. 5, the device selecting unit 140 of the eyewear 100b selects the television 100d to request to process the task. For example, the device selecting unit 140 selects a device to request to process the task on the basis of a result of comparison between battery residual in the smartphone 100a in the case where the smartphone 100a is requested to process the task, and battery residual in the television 100d in the case where the television 100d is requested to process the task. For example, when the smartphone 100a is not connected to a power source and the television 100d is connected to a power source, the television 100d is preferentially selected as a task processing request destination according to the above described determination.

Therefore, the request transmitting unit 160 of the eyewear 100b transmits a task processing request to the television 100d via the communication device 120 and the network 200 (S313). The television 100d executes the task processing in response to the request (S315), and transmits a result of the execution to the eyewear 100b via the network 200 (S317). In the eyewear 100b, the result outputting unit 180 receives the result of task processing via the communication device 120, and outputs the result as necessary.

### (6. Another embodiment)

Although the embodiment of the present disclosure has been described, there may be various embodiments in addition to the embodiment.

For example, in the above embodiment, each electronic device 100 (smartphone 100a, eyewear 100b, smartwatch 100c and/or television 100d) connected to the network 200 independently executes processing to select a device to execute a task in the case where the task to be processed has been generated. However, in another embodiment, it may be possible for a server 300 or any of the electronic devices 100 connected to the network 200 (host electronic device) to integratively select a device to execute the task. In this case, each of the electronic device 100 uploads information indicating its power status to the host electronic device or the server 300. In addition, when a task to be processed has been generated, the electronic device 100 notifies the host electronic device (sometimes host electronic device is electronic device 100 itself) or the server 300 of the generation of the task. The host electronic device or the server 300 selects a device to execute the task processing by the procedure described with reference to FIG. 3 in the above embodiment. Subsequently, the host electronic device or the server 300 transmits a task processing request to the selected device or the host electronic device or the server 300 itself executes the task processing. In this embodiment, the host electronic device or the server 300 has a functional configuration similar to the electronic device 100 according to the above embodiment.

### (7. Hardware Configuration)

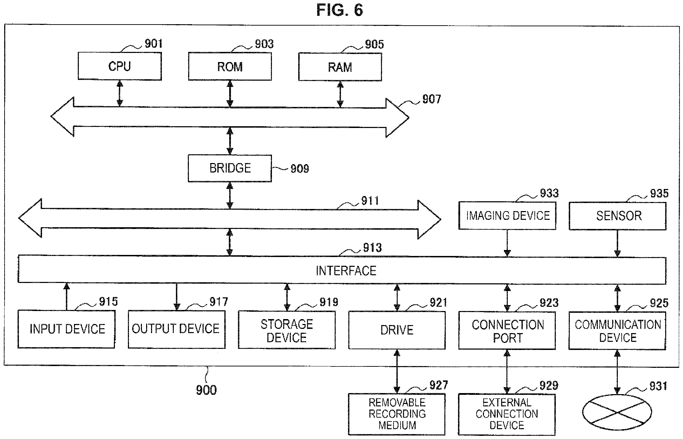

Next, with reference to FIG. 6, a hardware configuration of an information processing device according to an embodiment of the present disclosure is described. FIG. 6 is a block diagram illustrating a hardware configuration example of the information processing device according to the embodiment of the present disclosure. An illustrated information processing device 900 may achieve the electronic device 100 and the server 300 in the above described embodiment.

The information processing device 900 includes a central processing unit (CPU) 901, read only memory (ROM) 903, and random access memory (RAM) 905. In addition, the information processing device 900 may include a host bus 907, a bridge 909, an external bus 911, an interface 913, an input device 915, an output device 917, a storage device 919, a drive 921, a connection port 923, and a communication device 925. Moreover, the information processing device 900 may include an imaging device 933 and a sensor 935, as necessary. The information processing device 900 may include a processing circuit such as a digital signal processor (DSP) or an application-specific integrated circuit (ASIC), instead of or in addition to the CPU 901.

The CPU 901 functions as an arithmetic processing device and a control device, and controls the overall operation or a part of the operation of the information processing device 900 according to various programs recorded in the ROM 903, the RAM 905, the storage device 919, or a removable recording medium 927. The ROM 903 stores programs, operation parameters, and the like used by the CPU 901. The RAM 905 transiently stores programs used when the CPU 901 is executed, and parameters that change as appropriate when executing such programs. The CPU 901, the ROM 903, and the RAM 905 are connected with each other via the host bus 907 configured from an internal bus such as a CPU bus or the like. The host bus 907 is connected to the external bus 911 such as a Peripheral Component Interconnect/Interface (PCI) bus via the bridge 909.

The input device 915 is a device operated by a user such as a mouse, a keyboard, a touchscreen, a button, a switch, and a lever. The input device 915 may be a remote control device that uses, for example, infrared radiation and another type of radio waves. Alternatively, the input device 915 may be an external connection device 929 such as a mobile phone that corresponds to an operation of the information processing device 900. The input device 915 includes an input control circuit that generates input signals on the basis of information which is input by a user to output the generated input signals to the CPU 901. The user inputs various types of data and indicates a processing operation to the information processing device 900 by operating the input device 915.

The output device 917 includes a device that can visually or audibly report acquired information to a user. The output device 917 may be, for example, a display device such as a liquid crystal display (LCD), a plasma display panel (PDP), and an organic electro-luminescence (EL) display, an audio output device such as a speaker and a headphone, and a printer. The output device 917 outputs a result obtained through a process performed by the information processing device 900, in the form of text or video such as an image, or sounds such as voice and audio sounds.

The storage device 919 is a device for data storage that is an example of a storage unit of the information processing device 900. The storage device 919 includes, for example, a magnetic storage device such as a hard disk drive (HDD), a semiconductor storage device, an optical storage device, or a magneto-optical storage device. The storage unit 919 stores therein the programs and various data executed by the CPU 901, and various data acquired from an outside.

The drive 921 is a reader/writer for the removable recording medium 927 such as a magnetic disk, an optical disc, a magneto-optical disk, and a semiconductor memory, and built in or externally attached to the information processing device 900. The drive 921 reads out information recorded on the mounted removable recording medium 927, and outputs the information to the RAM 905. The drive 921 writes the record into the mounted removable recording medium 927.

The connection port 923 is a port used to directly connect devices to the information processing device 900. The connection port 923 may be a Universal Serial Bus (USB) port, an IEEE1394 port, or a Small Computer System Interface (SCSI) port, for example. The connection port 923 may also be an RS-232C port, an optical audio terminal, a High-Definition Multimedia Interface (HDMI (registered trademark)) port, and so on. The connection of the external connection device 929 to the connection port 923 makes it possible to exchange various kinds of data between the information processing device 900 and the external connection device 929.

The communication device 925 is a communication interface including, for example, a communication device for connection to a communication network 931. The communication device 925 may be, for example, a wired or wireless local area network (LAN), Bluetooth (registered trademark), or a communication card for a wireless USB (WUSB). The communication device 925 may also be, for example, a router for optical communication, a router for asymmetric digital subscriber line (ADSL), or a modem for various types of communication. For example, the communication device 925 transmits and receives signals in the Internet or transits signals to and receives signals from another communication device by using a predetermined protocol such as TCP/IP. The communication network 931 to which the communication device 925 connects is a network established through wired or wireless connection. The communication network 931 is, for example, the Internet, a home LAN, infrared communication, radio wave communication, or satellite communication.

The imaging device 933 is a device that shoots a real space by using an image sensor such as a charge coupled device (CCD) and a complementary metal oxide semiconductor (CMOS), and various members such as a lens for controlling image formation of a subject image onto the image sensor, and generates the shot image. The imaging device 933 may shoot a still image or a moving image.

The sensor 935 is various sensors such as an acceleration sensor, a gyro sensor, a geomagnetic sensor, an optical sensor, and a sound sensor. The sensor 935 acquires information regarding a state of the information processing device 900 itself such as a posture of a housing of the information processing device 900, and information regarding an environment surrounding the information processing device 900 such as luminous intensity and noise around the information processing device 900. The sensor 935 may include a global positioning system (GPS) sensor that receives GPS signals to measure latitude, longitude, and altitude of the device.

The example of the hardware configuration of the information processing device 900 has been described. Each of the structural elements described above may be configured by using a general purpose component or may be configured by hardware specialized for the function of each of the structural elements. The configuration may be changed as necessary in accordance with the state of the art at the time of working of the present disclosure.

### (8. Supplement)

The embodiments of the present disclosure may include, for example, the above-described electronic device, server, system, an information processing method executed by the electronic device, the server, or the system, a program for causing the information processing device or the server to exhibit its function, and a non-transitory tangible medium having the program stored therein.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) An electronic device that is connected to a network, the electronic device including:
   a power status detecting unit configured to acquire information indicating a power status of each of one or a plurality of devices connected to the network;
   a device selecting unit configured to select a device that processes a task of the electronic device from among the one or plurality of devices, on the basis of the power status of each of the one or plurality of devices; and
   a request transmitting unit configured to transmit a task processing request to the selected device.
(2) The electronic device according to (1), wherein
   the power status detecting unit acquires first information indicating a power status of the electronic device and second information indicating power statuses of other devices connected to the network,
   on the basis of the power statuses indicated by the first information and the second information, the device selecting unit selects whether to carry out the task processing in the electronic device or to request at least one of the other devices to carry out at least a part of the task processing, and
   in the case where the at least one of the other devices is requested to carry out at least a part of the task processing, the request transmitting unit transmits the task processing request to the at least one of the other devices.
(3) The electronic device according to (2), wherein
   the device selecting unit carries out the selection on the basis of a result of comparison between battery residual in the electronic device in the case where the electronic device carries out the task processing, the battery residual being computed from the first information, and battery residual in the at least one of the other devices in the case where the at least one of the other devices is requested to carry out the task processing, the battery residual being computed from the second information.
(4) The electronic device according to (2) or (3), wherein
   the request transmitting unit transmits a request to the at least one of the other devices, the request including a predicted value of an amount of power to be consumed to carry out the task processing.
(5) The electronic device according to (4), wherein
   in the case where the at least one of the other devices has rejected the task processing on the basis of the predicted value of the amount of power to be consumed, the device selecting unit reselects a device that processes the task.
(6) The electronic device according to any one of (1) to (5), wherein
   the power status detecting unit acquires information indicating power statuses of a first device and a second device, the first device and the second device being different from the electronic device, and
   the device selecting unit selects whether to request the first device or the second device to process the task.
(7) The electronic device according to (6), wherein
   the device selecting unit carries out the selection on the basis of a result of comparison between battery residual in the first device in the case where the first device is requested to process the task, and battery residual in the second device in the case where the second device is requested to process the task.
(8) The electronic device according to any one of (1) to (7), wherein
   the power status detecting unit acquires information indicating a power status of a device newly connected to the network.
(9) The electronic device according to any one of (1) to (8), wherein
   when any of the one or plurality of devices has been connected to a power source, the power status detecting unit updates information indicating a power status of the any of the one or plurality of devices connected to the power source.
(10) The electronic device according to any one of (1) to (9), wherein
   when battery residual of any of the one or plurality of devices has changed, the power status detecting unit updates information indicating a power status of the any of the one or plurality of devices.
(11) The electronic device according to any one of (1) to (10), wherein
   the power status detecting unit acquires information indicating battery residual, a power source connecting status, predicted operating time, or processing performance of each of the one or plurality of devices.
(12) The electronic device according to any one of (1) to (11), wherein
   the device selecting unit carries out the selection on the basis of a predicted value of an amount of power to be consumed to carry out the task processing.
(13) A recording medium having a program stored therein, the program causing a processor included in an electronic device connected to a network to achieve:
   a function of acquiring information indicating a power status of each of one or a plurality of devices connected to the network;
   a function of selecting a device that processes a task of the electronic device from among the one or plurality of devices, on the basis of the power status of each of the one or plurality of devices; and a function of transmitting a task processing request to the selected device.

### Reference Signs List

- 10: system
- 100: electronic device
- 110: power status detecting unit
- 120: communication device
- 130: power status information
- 140: device selecting unit
- 150: task data
- 160: request transmitting unit
- 170: task processing unit
- 180: result outputting unit
- 200: network
- 300: server

## Claims

1. An electronic device that is connected to a network, the electronic device comprising:
a power status detecting unit configured to acquire information indicating a power status of each of one or a plurality of devices connected to the network;
a device selecting unit configured to select a device that processes a task of the electronic device from among the one or plurality of devices, on the basis of the power status of each of the one or plurality of devices; and
a request transmitting unit configured to transmit a task processing request to the selected device.

2. The electronic device according to claim 1, wherein
the power status detecting unit acquires first information indicating a power status of the electronic device and second information indicating power statuses of other devices connected to the network,
on the basis of the power statuses indicated by the first information and the second information, the device selecting unit selects whether to carry out the task processing in the electronic device or to request at least one of the other devices to carry out at least a part of the task processing, and
in the case where the at least one of the other devices is requested to carry out at least a part of the task processing, the request transmitting unit transmits the task processing request to the at least one of the other devices.

3. The electronic device according to claim 2, wherein
the device selecting unit carries out the selection on the basis of a result of comparison between battery residual in the electronic device in the case where the electronic device carries out the task processing, the battery residual being computed from the first information, and battery residual in the at least one of the other devices in the case where the at least one of the other devices is requested to carry out the task processing, the battery residual being computed from the second information.

4. The electronic device according to claim 2, wherein
the request transmitting unit transmits a request to the at least one of the other devices, the request including a predicted value of an amount of power to be consumed to carry out the task processing.

5. The electronic device according to claim 4, wherein
in the case where the at least one of the other devices has rejected the task processing on the basis of the predicted value of the amount of power to be consumed, the device selecting unit reselects a device that processes the task.

6. The electronic device according to claim 1, wherein
the power status detecting unit acquires information indicating power statuses of a first device and a second device, the first device and the second device being different from the electronic device, and
the device selecting unit selects whether to request the first device or the second device to process the task.

7. The electronic device according to claim 6, wherein
the device selecting unit carries out the selection on the basis of a result of comparison between battery residual in the first device in the case where the first device is requested to process the task, and battery residual in the second device in the case where the second device is requested to process the task.

8. The electronic device according to claim 1, wherein
the power status detecting unit acquires information indicating a power status of a device newly connected to the network.

9. The electronic device according to claim 1, wherein
when any of the one or plurality of devices has been connected to a power source, the power status detecting unit updates information indicating a power status of the any of the one or plurality of devices connected to the power source.

10. The electronic device according to claim 1, wherein
when battery residual of any of the one or plurality of devices has changed, the power status detecting unit updates information indicating a power status of the any of the one or plurality of devices.

11. The electronic device according to claim 1, wherein
the power status detecting unit acquires information indicating battery residual, a power source connecting status, predicted operating time, or processing performance of each of the one or plurality of devices.

12. The electronic device according to claim 1, wherein
the device selecting unit carries out the selection on the basis of a predicted value of an amount of power to be consumed to carry out the task processing.

13. A recording medium having a program stored therein, the program causing a processor included in an electronic device connected to a network to achieve:
a function of acquiring information indicating a power status of each of one or a plurality of devices connected to the network;
a function of selecting a device that processes a task of the electronic device from among the one or plurality of devices, on the basis of the power status of each of the one or plurality of devices; and
a function of transmitting a task processing request to the selected device.
